# EUROPEAN PATENT SPECIFICATION

(11) **EP 3 588 636 B1**
(45) Date of publication and mention of the grant of the patent: **23.08.2023**
(21) Application number: 18757051.0
(22) Date of filing: 16.02.2018
(51) Int. Cl.: H01M 4/13, H01M 4/62, H01M 10/0525

(54) **BINDER COMPOSITION FOR NON-AQUEOUS SECONDARY BATTERIES, SLURRY COMPOSITION FOR NON-AQUEOUS SECONDARY BATTERY FUNCTIONAL LAYERS, FUNCTIONAL LAYER FOR NON-AQUEOUS SECONDARY BATTERIES, AND NON-AQUEOUS SECONDARY BATTERY**
BINDEMITTELZUSAMMENSETZUNG FÜR NICHTWÄSSRIGE SEKUNDÄRBATTERIEN, SCHLAMMZUSAMMENSETZUNG FÜR FUNKTIONSSCHICHTEN EINER NICHTWÄSSRIGEN SEKUNDÄRBATTERIE, FUNKTIONSSCHICHT FÜR NICHTWÄSSRIGE SEKUNDÄRBATTERIEN UND NICHTWÄSSRIGE SEKUNDÄRBATTERIE
COMPOSITION DE LIANT POUR BATTERIES SECONDAIRES NON-AQUEUSES, COMPOSITION DE BOUILLIE POUR COUCHES FONCTIONNELLES DE BATTERIE SECONDAIRE NON-AQUEUSE, COUCHE FONCTIONNELLE POUR BATTERIES SECONDAIRES NON-AQUEUSES, ET BATTERIE SECONDAIRE NON-AQUEUSE

(30) Priority: 24.02.2017 JP 2017033955
(43) Date of publication of application: 01.01.2020
(73) Proprietor: Zeon Corporation, Tokyo 100-8246 (JP)
(72) Inventor: SONOBE Kenya, Tokyo 100-8246 (JP); ISSHIKI Yasuhiro, Tokyo 100-8246 (JP)
(74) Representative: Maiwald GmbH
(86) International application number: PCT/JP2018/005553
(87) International publication number: WO 2018/155345

(56) References cited:
- EP-A2- 2 741 352
- WO-A1-02/084764
- WO-A1-2014/119315
- CN-A- 105 788 887
- CN-A- 106 129 394
- JP-A- 2013 084 351
- US-A1- 2016 254 545

## Description

### TECHNICAL FIELD

The present disclosure relates to compositions for non-aqueous secondary batteries, slurry compositions for non-aqueous secondary battery functional layers, functional layers for non-aqueous secondary batteries, and non-aqueous secondary batteries.

### BACKGROUND

Non-aqueous secondary batteries (hereinafter may be simply referred to as "secondary batteries") such as lithium ion secondary batteries are small and light, high in energy density, and capable of repeated cycles of charge and discharge. For such characteristics, secondary batteries are used in a wide variety of applications. A non-aqueous secondary battery generally includes electrodes (positive and negative electrodes) and a separator for separating the positive and negative electrodes from each other to prevent a short-circuit between them.

Battery members used for secondary batteries include those that have functional layers containing a binder and optional particles which are blended to allow the battery member to exert a desired function (hereinafter "functional particles").

Specifically, separators used for secondary batteries include those that have on a separator substrate a binder-containing adhesive layer and a porous membrane layer containing a binder and non-conductive particles that serve as functional particles. Electrodes used for secondary batteries include those that have on a current collector an electrode mixed material layer containing a binder and electrode active material particles that serve as functional particles, and those that additionally have such an adhesive layer and/or a porous membrane layer formed on an electrode substrate which has an electrode mixed material layer formed on a current collector.

For further improved performance of secondary batteries, attempts have been made to improve binder compositions containing a binder. For example, PTL 1 proposes a technique of improving the adhesiveness of the electrode mixed material layer to the current collector by the use of specific binder compositions.

PTL 2 to PTL 6 all refer to binder compositions comprising a mixture of one or more polymers with a melamine compound, and the use thereof for the preparation of a slurry and an electrode layer in a lithium secondary battery.

PTL 7 and PTL 8 describe binder compositions for lithium secondary batteries, comprising a mixture of a fluorine-based polymer and a functionalized polymer.

### CITATION LIST

### Patent Literature

PTL 1: JP2016-009544A
PTL 2 : CN 105 788 887 A
PTL 3 : EP 2 741 352 A2
PTL 4 : CN 106 129 394 A
PTL 5 : US 2016/254545 A1
PTL 6 : WO 2014/119315 A1
PTL 7 : WO 02/084764 A1
PTL 8 : JP 2013 084351 A

### SUMMARY

### (Technical Problem)

With the conventional technique described above, however, it was difficult to ensure sufficient adhesiveness of the electrode mixed material layer, and also it was impossible for secondary batteries to exert excellent rate characteristics. Thus, the conventional technique described above has room for improvement in providing a functional layer such as an electrode mixed material layer with excellent adhesiveness and in improving the rate characteristics of secondary batteries.

An object of the present disclosure is therefore to provide a binder composition for non-aqueous secondary batteries (hereinafter also simply referred to as "binder composition") which has an excellent binding capacity and which is capable of forming a functional layer which may improve the rate characteristics of non-aqueous secondary batteries.

Another object of the present disclosure is to provide a slurry composition for non-aqueous secondary battery functional layers (hereinafter also simply referred to as "slurry composition") which is capable of forming a functional layer which has excellent adhesiveness and which may improve the rate characteristics of non-aqueous secondary batteries.

Still another object of the present disclosure is to provide a functional layer for non-aqueous secondary batteries (hereinafter also simply referred to as "functional layer") which has excellent adhesiveness and which may improve the rate characteristics of non-aqueous secondary batteries.

Yet another object of the present disclosure is to provide a non-aqueous secondary battery having excellent rate characteristics.

### (Solution to Problem)

The inventor made extensive studies to solve the foregoing problem. As a result, the inventor has established that a binder composition which comprises a binder and a melamine compound at a specific ratio has an excellent binding capacity, and that a functional layer formed using the binder composition allows a secondary battery having the functional layer to exert excellent rate characteristics while increasing the adhesiveness of the functional layer. The inventor completed the present disclosure based on this discovery.

Specifically, the present disclosure aims to advantageously solve the foregoing problem, and binder compositions of the present disclosure comprise a binder and a melamine compound, wherein an amount of the melamine compound is 0.5 parts by mass or more and 85 parts by mass or less per 100 parts by mass of the binder, wherein the melamine compound is melamine cyanurate. Because binder compositions which comprise a binder and a specific amount of a melamine compound with respect to the binder as described above show an excellent binding capacity, it is possible to obtain a functional layer having excellent adhesiveness using such binder compositions. It is then possible to allow a secondary battery to exert excellent rate characteristics when a battery member having such a functional layer is used.

In the binder compositions of the present invention, the binder is a polymer having at least one functional group selected from the group consisting of carboxylic acid group, hydroxyl group, amino group, epoxy group, oxazoline group, sulfo group, nitrile group, and amide group. When a polymer having any of the functional groups described above is used as a binder, it is possible to further increase the binding capacity of the binder compositions and also to further improve the adhesiveness of the functional layer and rate characteristics of secondary batteries.

The present disclosure aims to advantageously solve the foregoing problem, and slurry compositions of the present disclosure comprise any of the binder compositions described above. When a functional layer is formed from any of the slurry compositions described above, it is possible to increase the adhesiveness of the functional layer. When a battery member having such a functional layer is used, it is possible to allow a secondary battery to exert excellent rate characteristics.

The slurry compositions of the present disclosure can further comprise electrode active material particles. When the slurry compositions comprise electrode active material particles, it is possible to form, using the slurry compositions, an electrode mixed material layer which has excellent adhesiveness and which may allow a secondary battery to exert excellent rate characteristics.

The present disclosure aims to advantageously solve the foregoing problem, and a functional layer of the present disclosure is formed using any of the slurry compositions described above. A functional layer formed from any of the slurry compositions described above shows excellent adhesiveness. When a battery member having such a functional layer is used, it is possible to allow a secondary battery to exert excellent rate characteristics.

The present disclosure aims to advantageously solve the foregoing problem, and a non-aqueous secondary battery of the present disclosure comprises the functional layer described above. A secondary battery which comprises a battery member having the functional layer described above has excellent battery characteristics such as rate characteristics.

Herein, a functional layer which comprises a binder and electrode active material particles is referred to as an "electrode mixed material layer," a functional layer which comprises a binder and non-conductive particles is referred to as a "porous membrane layer," and a functional layer which comprises a binder but comprises neither electrode active material particles nor non-conductive particles is referred to as an "adhesive layer."

### (Advantageous Effect)

According to the present disclosure, it is possible to provide a binder composition for non-aqueous secondary batteries which has an excellent binding capacity and which is capable of forming a functional layer which may improve the rate characteristics of non-aqueous secondary batteries.

According to the present disclosure, it is also possible to provide a slurry composition for non-aqueous secondary battery functional layers which is capable of forming a functional layer which has excellent adhesiveness and which may improve the rate characteristics of non-aqueous secondary batteries.

According to the present disclosure, it is also possible to provide a functional layer for non-aqueous secondary batteries which has excellent adhesiveness and which may improve the rate characteristics of non-aqueous secondary batteries.

According to the present disclosure, it is also possible to provide a non-aqueous secondary battery having excellent rate characteristics.

### DETAILED DESCRIPTION

Hereinafter, embodiments of the present disclosure will be described in detail.

The binder composition of the present disclosure is used in applications for manufacturing a non-aqueous secondary battery. For example, the binder composition can be used to prepare the slurry composition of the present disclosure. The slurry composition of the present disclosure can be used to form any functional layer (e.g., electrode mixed material layer, porous membrane layer, adhesive layer) that performs such functions as electron transfer, or reinforcement or adhesion in a non-aqueous secondary battery. The functional layer of the present disclosure is formed from the slurry composition of the present disclosure. The non-aqueous secondary battery of the present disclosure comprises a battery member having the functional layer of the present disclosure.

### (Binder Composition for Non-Aqueous Secondary Battery)

The binder composition of the present disclosure is a composition in which a binder and a melamine compound are dissolved and/or dispersed in a solvent. The binder composition of the present disclosure may comprise additional component(s) other than the binder, melamine compound and solvent. The binder composition comprises 0.5 parts by mass or more and 85 parts by mass or less of a melamine compound per 100 parts by mass of a binder.

Possibly due to interactions between the melamine compound and the binder by means of, for example, hydrogen bonding, the binder composition develops an excellent binding capacity when 0.5 parts by mass or more and 85 parts by mass or less of the melamine compound is included per 100 parts by mass of the binder. When the binder composition of the present disclosure is used, it is possible to allow the resulting functional layer to exert excellent adhesiveness and therefore to improve battery characteristics of a secondary battery. Because the binder composition comprises a melamine compound in an amount of 85 parts by mass or less per 100 parts by mass of a binder, the proportion of the binder occupied in solids is ensured, whereby the adhesiveness of the functional layer is sufficiently maintained, and additionally, the electrical conductivity of the functional layer is not excessively lowered by the presence of an excessive melamine compound, and also the rate characteristics of a secondary battery are not impaired. Further, possibly due to the lubricating property of the melamine compound, when the binder composition is used to form an electrode mixed material layer that serves as a functional layer, the density of the electrode mixed material layer can be easily increased by pressure treatment (i.e., the pressability of the electrode mixed material layer improves). Thus, when the binder composition of the present disclosure is used, it is possible to provide a functional layer with excellent adhesiveness as well as to manufacture a secondary battery having excellent battery characteristics such as rate characteristics.

### <Binder>

The binder is a component that causes the binder composition to develop a binding capacity. In a functional layer formed on a substrate using a slurry composition containing the binder composition, the binder prevents detachment of such components as functional particles from the functional layer and also enables battery members to be bound together with the functional layer.

### [Binder Type]

The binder is not particularly limited as long as it can be used in a secondary battery. Examples of usable binders include polymers (synthetic polymers, e.g., addition polymers obtained by addition polymerization) obtained by polymerizing monomer compositions containing monomers which may develop a binding capacity. Examples of such polymers include aliphatic conjugated diene/aromatic vinyl copolymers (polymers mainly containing an aliphatic conjugated diene monomer unit and an aromatic vinyl monomer unit); acrylic polymers (polymers mainly containing a (meth)acrylic acid ester monomer unit); fluorine polymers (polymers mainly containing a fluorine-containing monomer unit); acrylic acid/acrylamide copolymers (polymers mainly containing a (meth)acrylic acid unit and a (meth)acrylamide unit); and acrylonitrile polymers (polymers mainly containing a (meth)acrylonitrile unit). These polymers may be used singly or in combination of two or more kinds at any ratio. Preferred are aliphatic conjugated diene/aromatic vinyl copolymers, acrylic acid/acrylamide copolymers, and acrylonitrile polymers.

Aliphatic conjugated diene monomers capable of forming the aliphatic conjugated diene monomer unit of the aliphatic conjugated diene/aromatic vinyl copolymers, aromatic vinyl monomers capable of forming the aromatic vinyl monomer unit of the aliphatic conjugated diene/aromatic vinyl copolymers, (meth)acrylic acid ester monomers capable of forming the (meth)acrylic acid ester monomer unit of the acrylic polymers, and fluorine-containing monomers capable of forming the fluorine-containing monomer unit of the fluorine polymers can be those known in the art.

The phrase "contain a monomer unit" means that "a repeat unit derived from a monomer is contained in a polymer obtained using that monomer."

The phrase "mainly contain" one or two more types of monomer units herein means that "when the amount of all the monomer units contained in a polymer is taken as 100% by mass, the proportion of the one type of the monomer unit or the total proportion of the two or more types of the monomer units exceeds 50% by mass."

The term "(meth)acrylic" herein means acrylic and/or methacrylic, and the term "(meth)acrylo" herein means acrylo and/or methacrylo.

### [Functional Group of Binder]

The polymer used as the binder has a functional group. The functional groups contained in the binder from the viewpoint of further enhancing the adhesiveness of a functional layer and the rate characteristics of a secondary battery are carboxylic acid group, hydroxyl group, amino group, epoxy group, oxazoline group, sulfo group, nitrile group, and amide group (hereinafter also collectively referred to as a "specific functional group"), with carboxylic acid group, hydroxyl group, amino group, nitrile group, and amide group being more preferred. These functional groups may be used singly or in combination of two or more kinds at any ratio.

Examples of polymers having two or more types of functional groups include, but not particularly limited to, polymers having a carboxylic acid group and a hydroxyl group; polymers having a carboxylic acid group and an amide group; polymers having a carboxylic acid group, a nitrile group, and an amino group; and polymers having a carboxylic acid group, an epoxy group, a hydroxyl group, and a nitrile group.

Methods of introducing a specific functional group to the polymer are not particularly limited. A polymer having specific functional monomer-containing monomer unit(s) may be obtained by using monomer(s) having a specific functional group (specific functional group-containing monomer(s). Alternatively, a polymer having on its terminal(s) the specific functional group may be obtained by modifying the terminal(s) of any polymer. The former polymer is preferred. Specifically, the polymer used as the binder preferably contains, as a specific functional group-containing monomer unit, at least any of a carboxylic acid group-containing monomer unit, a hydroxyl group-containing monomer unit, an amino group-containing monomer unit, an epoxy group-containing monomer unit, an oxazoline group-containing monomer unit, a sulfo group-containing monomer unit, a nitrile group-containing monomer unit, and an amide group-containing monomer unit. More preferably, the polymer contains at least any of a carboxylic acid group-containing monomer unit, a hydroxyl group-containing monomer unit, an amino group-containing monomer unit, a nitrile group-containing monomer unit, and an amide group-containing monomer unit.

Examples of polymers containing two or more types of specific functional group-containing monomer units include polymers containing a carboxylic acid group-containing monomer unit and a hydroxyl group-containing monomer unit; polymers containing a carboxylic acid group-containing monomer unit and an amide group-containing monomer unit; polymers containing a carboxylic acid group-containing monomer unit, a nitrile group-containing monomer unit, and an amino group-containing monomer unit; and polymers containing a carboxylic acid group-containing monomer unit, an epoxy group-containing monomer unit, a hydroxyl group-containing monomer unit, and a nitrile group-containing monomer unit.

Examples of carboxylic acid-containing monomers which may form the carboxylic acid group-containing monomer unit include monocarboxylic acids and derivatives thereof, dicarboxylic acids and acid anhydrides thereof, and derivatives thereof.

Examples of monocarboxylic acids include acrylic acid, methacrylic acid and crotonic acid.

Examples of monocarboxylic acid derivatives include 2-ethyl acrylic acid, isocrotonic acid, α-acetoxy acrylic acid, β-trans-aryloxyacrylic acid, and α-chloro-β-E-methoxy acrylic acid.

Examples of dicarboxylic acids include maleic acid, fumaric acid and itaconic acid.

Examples of dicarboxylic acid derivatives include methylmaleic acid, dimethylmaleic acid, phenylmaleic acid, chloromaleic acid, dichloromaleic acid, and fluoromaleic acid; and maleic acid monoesters such as nonyl maleate, decyl maleate, dodecyl maleate, octadecyl maleate, fluoroalkyl maleate.

Examples of acid anhydrides of dicarboxylic acids include maleic anhydride, acrylic anhydride, methyl maleic anhydride, and dimethyl maleic anhydride.

As carboxylic acid group-containing monomers, acid anhydrides which undergo hydrolysis to produce a carboxyl group can also be used. Preferred carboxylic acid-containing monomers are acrylic acid and methacrylic acid. Carboxylic acid group-containing monomers may be used singly or in combination of two or more kinds at any ratio.

Examples of hydroxyl group-containing monomers which may form the hydroxyl group-containing monomer unit include ethylenically unsaturated alcohols such as (meth)allyl alcohol, 3-butene-1-ol, and 5-hexene-1-ol; alkanol esters of ethylenically unsaturated carboxylic acids, such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; an ester of polyalkylene glycol and (meth)acrylic acid as represented by the general formula CH₂=CR^{a}-COO-(C_{q}H_{2q}O)ₚ-H (where p represents an integer of 2 to 9, q represents an integer of 2 to 4, and R^{a} represents a hydrogen atom or a methyl group); mono(meth)acrylates of dihydroxy esters of dicarboxylic acids, such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols, such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen and hydroxy-substituted (poly)alkylene glycols, such as glycerol mono(meth)allyl ether, (meth)allyl-2-chloro-3-hydroxypropyl ether, and (meth)allyl-2-hydroxy-3-chloropropyl ether; mono(meth)allyl ethers of polyhydric phenol, such as eugenol and iso-eugenol, and halogen-substituted forms thereof; (meth)allyl thioethers of alkylene glycols, such as (meth)allyl-2-hydroxyethyl thioether and (meth)allyl-2-hydroxy propyl thioether; and amides having a hydroxyl group, such as N-hydroxymethyl acrylamide (N-methylol acrylamide), N-hydroxymethyl methacrylamide, N-hydroxyethyl acrylamide, and N-hydroxyethyl methacrylamide. Hydroxyl group-containing monomers may be used singly or in combination of two or more kinds at any ratio.

The term "(meth)allyl" herein means allyl and/or methallyl, and the term "(meth)acryloyl" herein means acryloyl and/or methacryloyl.

Examples of amino group-containing monomers which may form the amino group-containing monomer unit include dimethylaminoethyl (meth)acrylate, diethylaminoethyl (meth)acrylate, aminoethyl vinylether, and dimethylaminoethyl vinylether. Amino group-containing monomers may be used singly or in combination of two or more kinds at any ratio.

The term "(meth)acrylate" herein means acrylate and/or methacrylate.

Examples of epoxy group-containing monomers which may form the epoxy group-containing monomer unit include monomers containing a carbon-carbon double bond and an epoxy group.

Examples of monomers containing a carbon-carbon double bond and an epoxy group include unsaturated glycidyl ethers such as vinyl glycidyl ether, allyl glycidyl ether, butenyl glycidyl ether, and o-allyl phenyl glycidyl ether; diene or polyene monoepoxides such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids, such as glycidyl acrylate, glycidyl methacrylate, glycidyl crotonate, glycidyl 4-heptenoate, glycidyl sorbate, glycidyl linolate, glycidyl 4-methyl-3-pentenoate, glycidyl esters of 3-cyclohexene carboxylic acid, and glycidyl esters of 4-methyl-3-cyclohexene carboxylic acid. Epoxy group-containing monomers may be used singly or in combination of two or more kinds at any ratio.

Examples of oxazoline group-containing monomers which may form the oxazoline group-containing monomer unit include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline. Oxazoline group -containing monomers may be used singly or in combination of two or more kinds at any ratio.

Examples of sulfo group-containing monomers which may form the sulfo group-containing monomer unit include vinyl sulfonic acid, methylvinyl sulfonic acid, (meth)allyl sufonic acid, styrene sulfonic acid, (meth)acrylic acid 2-sulfoethyl, 2-acrylamide-2-methyl propane sulfonic acid, and 3-allyloxy-2-hydroxypropane sulfonic acid. Sulfo group-containing monomers may be used singly or in combination of two or more kinds at any ratio.

Examples of nitrile group-containing monomers which may form the nitrile group-containing monomer unit include α,β-ethylenically unsaturated nitrile monomers. α,β-Ethylenically unsaturated nitrile monomers are not particularly limited so long as they are α,β-ethylenically unsaturated nitrile compounds having a nitrile group. Specific examples include acrylonitrile; α-halogeno acrylonitriles such as α-chloroacrylonitrile and α-bromoacrylonitrile; and α-alkyl acrylonitriles such as methacrylonitrile and α-ethyl acrylonitrile. Nitrile group-containing monomers may be used singly or in combination of two or more kinds at any ratio.

Examples of amide group-containing monomers which may form the amide group-containing monomer unit include acrylamide and methacrylamide. Amide group-containing monomers may be used singly or in combination of two or more kinds at any ratio.

When the polymer is, for example, an aliphatic conjugated diene/aromatic vinyl copolymer or an acrylic polymer, the proportion of the specific functional group-containing monomer unit in the polymer is preferably 0.3% by mass or more, more preferably 0.8% by mass or more, but preferably 20% by mass or less, and more preferably 10% by mass or less, based on the total amount (100%) of all the monomer units contained in the polymer. When the proportion of the specific functional group-containing monomer unit in the polymer falls within the range described above, it is possible to further improve the adhesiveness of a functional layer and rate characteristics of a secondary battery.

### [Method of Preparing Binder]

Methods of preparing the polymer as the binder are not particularly limited. The polymer as the binder can be produced by polymerizing a monomer composition containing the monomer(s) described above in aqueous solvent. The proportions of the monomers in the monomer composition can be determined in accordance with the proportions of the desired monomer units (repeat units) in the resulting polymer.

Any mode of polymerization can be used. For example, solution polymerization, suspension polymerization, bulk polymerization, emulsion polymerization or other any polymerization method can be used. As a polymerization reaction, ionic polymerization, radical polymerization, living radical polymerization, various types of condensation polymerization, addition polymerization or other polymerization reaction can be used. Where necessary, any emulsifiers and polymerization initiators agents known in the art can be used for polymerization.

### <Melamine Compound>

The melamine compound is a component that, when added in the binder composition containing the binder, may improve the binding capacity of the binder composition. Moreover, when an electrode mixed material layer as a functional layer is prepared using the binder composition containing the melamine compound, the pressability of the electrode mixed material layer obtained can be improved.

The "melamine compound" herein includes melamine and melamine derivatives, as well as salts thereof.

Examples of melamine and melamine derivatives include a compound represented by the following formula (I):

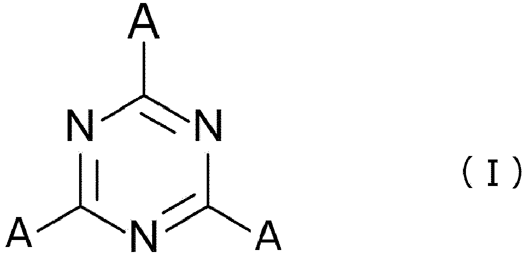

In formula (I), each A independently represents a hydroxyl group or -NR¹R² (where R¹ and R² each independently represent a hydrogen, a hydrocarbon group, or a hydroxyl group-containing hydrocarbon group, and where when a plurality of R¹ is present, the plurality of R¹ may be the same or different, and when a plurality of R² is present, the plurality of R² may be the same or different).

The hydrocarbon group and the hydroxyl group-containing hydrocarbon group represented by R¹ and R² may have one or more intervening oxygen atoms (-O-) between carbon atoms, with the proviso that when two or more intervening oxygen atoms appear the oxygen atoms shall not be adjacent to each other. The number of carbon atoms of each of the hydrocarbon group and the hydroxyl group-containing hydrocarbon group represented by R¹ and R² is not particularly limited. The hydrocarbon group and the hydroxyl group-containing hydrocarbon group each preferably have 1 or more and 5 or less carbon atoms.

Examples of salts of melamine and melamine derivatives include, but not particularly limited to, sulfates and cyanurates.

Melamine compounds may be used singly or in combination of two or more kinds at any ratio. From the perspective of further improving the adhesiveness of a functional layer and rate characteristics of a secondary battery, the melamine compound used according to the present invention is a salt of melamine with cyanuric acid (melamine cyanurate).

The amount of the melamine compound in the binder composition needs to be 0.5 parts by mass or more and 85 parts by mass or less per 100 parts by mass of the binder, preferably 1 part by mass or more, more preferably 5 parts by mass or more, even more preferably 15 parts by mass or more, particularly preferably 19 parts by mass or more, but preferably 80 parts by mass or less, more preferably 50 parts by mass or less, and even more preferably 30 parts by mass or less. When the amount of the melamine compound is less than 0.5 parts by mass per 100 parts by mass of the binder, it is not possible to ensure the adhesiveness of a functional layer. On the other hand, when the amount of the melamine compound exceeds 85 parts by mass per 100 parts by mass of the binder, the adhesiveness of a functional layer decreases and also the conductivity of the functional layer is impaired thus resulting in lower rate characteristics of a secondary battery. When the amount of the melamine compound is 0.5 parts by mass or more and 85 parts by mass or less per 100 parts by mass of the binder, it is possible to improve the pressability of an electrode mixed material layer formed from the slurry composition containing the binder composition.

### <Solvent>

The solvent contained in the binder composition is not particularly limited as long as it can dissolve or disperse the binder and the melamine compound described above; both of water and organic solvents can be used. Examples of usable organic solvents include acetonitrile, N-methyl-2-pyrrolidone, tetrahydrofuran, acetone, acetylpyridine, cyclopentanone, dimethylformamide, dimethylsulfoxide, methylformamide, methyl ethyl ketone, furfural, ethylene diamine, dimethyl benzene (xylene), methyl benzene (toluene), cyclopentyl methyl ether, and isopropyl alcohol.

These solvents may be used singly or in combination of two or more kinds at any mixing ratio.

### <Additional Component>

The binder composition of the present disclosure may optionally comprise, in addition to the binder, the melamine compound and the solvent described above, other polymers having different compositions and properties from the binder, conductive materials, wetting agents, viscosity modifiers, additives for electrolyte solution, and other additives known in the art which may be added to a functional layer such as an electrode mixed material layer, a porous membrane layer, and an adhesive layer. From the viewpoint of increasing the safety of a secondary battery, the binder composition of the present disclosure may comprise foaming agents such as sodium hydrogen carbonate and/or flame retardants such as phosphorus compounds or silicone compounds. These additional components may be used singly or in combination of two or more kinds.

The amount of each of the foaming agent and flame retardant can be, for example, 30 parts by mass or less or 15 parts by mass or less, per 100 parts by mass of the binder.

### <Method of Preparing Binder Composition>

Methods of preparing the binder composition are not particularly limited. Usually, the binder composition is prepared by mixing the binder, the melamine compound and other optional additional component(s) in a solvent. Mixing methods are not particularly limited. Mixing can be effected using a stirrer or disperser commonly used in the art.

### (Slurry Composition for Non-Aqueous Secondary Battery Functional Layer)

The slurry composition of the present disclosure is used in applications for manufacturing a functional layer, and comprises the binder composition described above and optionally further comprises functional particles and additional component(s). Specifically, the slurry composition of the present disclosure usually comprises the binder, melamine compound and solvent, and optionally further comprises functional particles and additional component(s). Because the slurry composition of the present disclosure comprises the binder composition, a functional layer having excellent adhesiveness can be obtained by drying the slurry composition for example on a substrate. When a battery member having such a functional layer is used, it is possible to allow a secondary battery to exert excellent battery characteristics, in particular, excellent rate characteristics.

### <Binder Composition>

As the binder composition, the binder composition of the present disclosure described above which comprises at least the binder and the melamine compound is used.

The amount of the binder composition blended in the slurry composition is not particularly limited. For example, when the slurry composition is a slurry composition for an electrode, the amount of the blended the binder composition can be such that the amount in solid content of the binder is 0.5 parts by mass or more and 15 parts by mass or less per 100 parts by mass of electrode active material particles. Further, when the slurry composition is, for example, a slurry composition for a porous membrane layer, the amount of blended the binder composition can be such that the amount in solid content of the binder is 0.5 parts by mass or more and 30 parts by mass or less per 100 parts by mass of non-conductive particles.

### <Functional Particles>

When the functional layer is, for example, an electrode mixed material layer, examples of functional particles that allow the functional layer to exert a target function include electrode active material particles. When the functional layer is a porous membrane layer, examples of such functional particles include non-conductive particles.

### [Electrode Active Material Particles]

Electrode active material particles are not particularly limited and examples thereof include particles made of known electrode active materials used in secondary batteries. Specifically, for example, the electrode active material particles that can be used in an electrode mixed material layer of a lithium ion secondary battery as an example of a secondary battery are not particularly limited, and particles made of the electrode active materials described below can be used.

### -Positive Electrode Active Material-

Examples of positive electrode active materials to be blended in the positive electrode mixed material layer of the positive electrode of a lithium ion secondary battery include transition metal-containing compounds, such as transition metal oxides, transition metal sulfides, and composite metal oxides comprising lithium and transition metals. Examples of transition metals include Ti, V, Cr, Mn, Fe, Co, Ni, Cu, and Mo.

Specifically, any positive electrode active material can be used. Examples thereof include lithium-containing cobalt oxide (LiCoO₂), lithium manganate (LiMn₂O₄), lithium-containing nickel oxide (LiNiO₂), lithium-containing composite oxides of Co-Ni-Mn, lithium-containing composite oxides of Ni-Mn-Al, lithium-containing composite oxides of Ni-Co-Al, olivine lithium iron phosphate (LiFePO₄), olivine lithium manganese phosphate (LiMnPO₄), spinel compounds with excess lithium having the formula Li₁₊ₓMn₂₋ₓO₄ (0<X<2), Li[Ni_{0.17}Li_{0.2}Co_{0.07}Mn_{0.56}]O₂, and LiNi_{0.5}Mn_{1.5}O₄.

The positive electrode active materials described above may be used alone or in combination of two or more kinds.

### -Negative Electrode Active Material-

Examples of negative electrode active materials to be blended in the negative electrode mixed material layer of the negative electrode of a lithium ion secondary battery include carbon-based negative electrode active materials, metal-based negative electrode active materials, and combinations thereof.

The carbon-based negative electrode active material refers to an active material that contains a carbon backbone into which lithium can be intercalated (or doped). Specific examples of carbon-based negative electrode active materials include carbonaceous materials such as coke, mesocarbon microbeads (MCMB), mesophase pitch-based carbon fiber, pyrolytic vapor-grown carbon fiber, sintered phenolic resin, polyacrylonitrile-based carbon fiber, pseudo-isotropic carbon, sintered furfuryl alcohol resin (PFA), and hard carbon; and graphitic materials such as natural graphite and artificial graphite.

The metal-based negative electrode active material is an active material which contains a metal, the structure of which usually contains an element into which lithium can be intercalated, and which exhibits, when lithium is intercalated, a theoretical electric capacitance of 500 mAh/g or higher per unit mass. Examples of metal-based negative electrode active materials include lithium metal; elemental metals that may form lithium alloys (e.g., Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides of the foregoing. Additional examples include oxides such as lithium titanate.

The negative electrode active materials may be used singly or in combination of two or more kinds at any ratio.

### [Non-Conductive Particles]

Non-conductive particles to be blended into the porous membrane layer are not particularly limited. Examples thereof include non-conductive particles known in the art used for secondary batteries.

Specifically, both inorganic and organic microparticles can be used as non-conductive particles. However, inorganic microparticles are normally used. Among materials of non-conductive particles, such materials are preferred that are present stably in the use environment of secondary batteries and have electrochemical stability. Preferred examples of materials of non-conductive particles from such a perspective include particles of oxides such as aluminum oxide (alumina), hydrated aluminum oxide (boehmite), silicon oxide, magnesium oxide (magnesia), calcium oxide, titanium oxide (titania), BaTiO₃, ZrO, and alumina-silica composite oxide; particles of nitrides such as aluminum nitride and boron nitride; particles of covalent crystals such as silicon and diamond; particles of hardly-soluble ionic crystals such as barium sulfate, calcium fluoride and barium fluoride; and microparticles of clays such as talc and montmorillonite. These particles may be subjected to element replacement, surface treatment, solid solution treatment and/or the like where necessary.

The non-conductive particles described above may be used alone or in combination of two or more kinds.

### <Additional Component>

Additional components to be blended in the slurry composition are not particularly limited. Examples include those which may be blended in the binder composition of the present disclosure. Additional components may be used singly or in combination of two or more kinds at any ratio.

### <Preparation of Slurry Composition>

Methods of preparing the slurry compositions are not particularly limited.

For example, when the slurry composition is a slurry composition for an electrode, the slurry composition can be prepared by mixing the binder composition, electrode active material particles and optional additional component(s) in the presence of a solvent.

When the slurry composition is a slurry composition for a porous membrane layer, the slurry composition can be prepared by mixing the binder composition, non-conductive particles and optional additional component(s) in the presence of a solvent.

When the slurry composition is a slurry composition for an adhesive layer, the slurry composition can be the binder composition itself or can be the binder composition diluted with a solvent. Alternatively, the slurry composition can be prepared by mixing the binder composition and optional additional component(s) in the present of a solvent.

Solvents used for preparing the slurry composition also include those contained in the binder composition. Mixing methods are not particularly limited. Mixing can be effected using a stirrer or disperser commonly used in the art.

### <Functional Layer for Non-Aqueous Secondary Battery>

The functional layer of the present disclosure is a layer that performs such functions as electron transfer, or reinforcement or adhesion in a non-aqueous secondary battery. Examples of the functional layer include an electrode mixed material layer that performs electron transfer via electrochemical reactions, a porous membrane layer for improving heat resistance and strength, and an adhesive layer for improving adhesiveness. The functional layer of the present disclosure is formed from the slurry composition of the present disclosure and can be formed for example by applying the slurry composition on a surface of a suitable substrate to form a coating film and drying the coating film. Specifically, the functional layer of the present disclosure is formed of a dried product of the slurry composition and usually comprises at least the binder and the melamine compound. Because components contained in the functional layer are those contained in the slurry composition from which it is made, suitable proportions of the components in the functional layer are identical to suitable proportions of the corresponding components in the slurry composition. When the binder is a polymer having a cross-linkable functional group (e.g., an epoxy group and an oxazoline group), the polymer may be cross-linked for example at the time of drying the slurry composition or at the time of heat treatment optionally carried out after drying of the slurry composition (i.e., the functional layer may comprises a cross-linked product of the binder).

Because the functional layer of the present disclosure is formed from the slurry composition of the present disclosure which comprises the binder composition of the present disclosure, the functional layer has excellent adhesiveness as well as allows a secondary battery having a battery member provided with the functional layer to exert excellent battery characteristics (e.g., rate characteristics).

### [Substrate]

Substrates to which the slurry composition is applied are not limited. For example, a coating film of the slurry composition may be formed on a surface of a releasable substrate, so that the coating film is then dried to form a functional layer and the releasable substrate is separated from the functional layer. The functional layer separated from the releasable substrate in this way can be used as a self-supporting membrane for forming a battery member of a secondary battery.

However, from the viewpoint of improving the production efficiency of a battery member by omitting the step of separating the functional layer, as a substrate, it is preferred to use a current collector, a separator substrate or an electrode substrate. Specifically, for preparation of an electrode mixed material layer, the slurry composition is preferably applied on a current collector as a substrate. Moreover, for preparation of a porous membrane layer or an adhesive layer, the slurry composition is preferably applied on a separator or electrode substrate.

### -Current Collector-

Materials used to form a current collector are those having electrical conductivity and electrochemical durability. Specifically, a current collector made of iron, copper, aluminum, nickel, stainless steel, titanium, tantalum, gold, platinum or the like may be used. Copper foil is particularly preferred as a current collector used for a negative electrode. Aluminum foil is particularly preferred as a current collector used for a positive electrode. The materials described above may be used singly or in combination of two or more kinds at any ratio.

### -Separator Substrate-

Separator substrates are not particularly limited. Examples include organic separator substrates and other separator substrates known in the art. Organic separator substrates are porous members made of organic material. Examples of separator substrates include microporous membranes and non-woven fabrics containing a polyolefin resin such as polyethylene or polypropylene or an aromatic polyamide resin. Preferred are microporous membranes or non-woven fabrics made of polyethylene for their excellent strength.

### [Electrode Substrate]

Electrode substrates (positive and negative electrode substrates) are not particularly limited and examples thereof include electrode substrates having on the current collector described above an electrode mixed material layer containing electrode active material particles and a binder.

Electrode active material particles and binder contained in the electrode mixed material layer of an electrode substrate are not particularly limited. The electrode active material particles described above in the section titled "Slurry Composition for Non-Aqueous Secondary Battery Functional Layer" and the binders described above in the section titled "Binder Composition for Non-Aqueous Secondary Battery" can be used. In the electrode mixed material layer of an electrode substrate, the melamine compound may be further included. Specifically, the functional layer of the present disclosure may be used as the electrode mixed material layer in an electrode substrate.

### [Method of Forming Functional Layer]

Examples of methods of forming a functional layer on a substrate such as the current collector, separator substrate or electrode substrate described above include:
1) a method in which the slurry composition is applied on a surface of the substrate (surface on the electrode mixed material layer side in the case of an electrode substrate; the same shall apply hereinafter) and dried;
2) a method in which the substrate is immersed in the slurry composition and dried; and
3) a method in which the slurry composition is applied on a releasable substrate and dried to form thereon a functional layer, and the functional layer is transferred to a surface of the substrate.

Preferred is the method 1) because of easiness of controlling the thickness of the functional layer. More specifically, the method 1) includes applying the slurry composition on the substrate (coating step) and forming a functional layer by drying the slurry composition applied on the substrate (drying step).

### -Coating Step-

In the coating step, methods of applying the slurry composition on the substrate are not particularly limited. Examples include doctor blade coating, reverse roll coating, direct roll coating, gravure coating, extrusion coating, and brush coating.

### -Drying Step-

In the drying step, any drying method known in the art can be used to dry the slurry composition on the substrate. Examples of drying methods include drying by warm, hot or low-humidity air, vacuum drying, and drying by irradiation with infrared rays or electron beams. To avoid the concern of thermal decomposition and sublimation of the melamine compound used, the drying temperature is preferably below 200°C, and more preferably below 150°C.

When preparing an electrode mixed material layer as the functional layer, after the drying step, it is preferred to perform pressure treatment on the electrode mixed material layer using a mold press or a roll press. The electrode mixed material layer as the functional layer of the present disclosure has excellent pressability because it contains a predetermined amount of the melamine compound. Thus, by pressure treatment, an electrode mixed material layer can be easily made that has a high density as well as exhibits excellent adhesiveness to a current collector.

### (Battery Member Having Functional Layer)

Battery members (separator and electrode) having the functional layer of the present disclosure may also comprise the functional layer of the present disclosure and component(s) other than the substrate, so long as the effect of the present disclosure is not significantly compromised. Such components are not particularly limited, and examples thereof include an electrode mixed material layer, a porous membrane layer and an adhesive layer which do not correspond to the functional layer of the present disclosure.

A battery member may comprise a plurality of functional layers of the present disclosure. For example, an electrode may comprise on a current collector an electrode mixed material layer formed from the slurry composition for an electrode and comprise on the electrode mixed material layer a porous membrane layer and/or an adhesive layer formed from the slurry composition for a porous membrane layer and/or the slurry composition for an adhesive layer. Further, for example, a separator may comprise on a separator substrate a porous membrane layer formed from the slurry composition for a porous membrane layer and comprise on the porous membrane layer an adhesive layer formed from the slurry composition for an adhesive layer.

A battery member having the functional layer of the present disclosure can be favorably attached to an adjacent battery member and also allows a secondary battery to exert excellent battery characteristics (e.g., rate characteristics).

### (Non-Aqueous Secondary Battery)

The secondary battery of the present disclosure comprises the functional layer of the present disclosure described above. More specifically, the non-aqueous secondary battery of the present disclosure comprises a positive electrode, a negative electrode, a separator, and an electrolyte solution, wherein the functional layer is included in at least one of the positive electrode, the negative electrode and the separator. The secondary battery of the present disclosure may exhibit excellent battery characteristics (rate characteristics).

### <Positive Electrode, Negative Electrode and Separator>

At least one of the positive electrode, the negative electrode and the separator used in the secondary battery of the present disclosure is a battery member provided with the functional layer of the present disclosure. It should be noted that the positive electrode, the negative electrode and the separator which do not have the functional layer of the present disclosure are not particularly limited and those known in the art can be used.

### <Electrolyte Solution>

As the electrolyte solution, typically used is an organic electrolyte solution obtained by dissolving a supporting electrolyte into organic solvent. The supporting electrolyte is, for example, a lithium salt in the case of lithium-ion secondary batteries. Examples of lithium salts include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferred in that they easily dissolve in solvent and exhibit a high degree of dissociation. These electrolytes may be used alone or in combination or two or more kinds. Normally, the lithium ion conductivity tends to increase as a supporting electrolyte having a higher degree of dissociation is used. Thus, the lithium ion conductivity can be adjusted by the type of the supporting electrolyte used.

Any organic solvent which can dissolve the supporting electrolyte can be used for the electrolyte solution. In the case of lithium-ion secondary batteries, suitable organic solvents include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Alternatively, a mixture of two or more of these solvents may be used. Preferred are carbonates for their high permittivity and a wide stable potential region. Normally, the lithium ion conductivity tends to increase as a solvent having a lower viscosity is used. Thus, the lithium ion conductivity can be adjusted by the type of the solvent used.

The concentration of the electrolyte in the electrolyte solution can be adjusted as appropriate. Further, any additive known in the art can be added to the electrolyte solution.

### <Method of Manufacturing Non-Aqueous Secondary Battery>

The non-aqueous secondary battery of the present disclosure can be manufactured for example by stacking a positive electrode and a negative electrode with a separator provided therebetween, rolling or folding the resulting laminate as necessary, placing it in a battery container, filling the battery container with an electrolyte solution, and sealing the container. At least one of the positive electrode, the negative electrode, and the separator should be a battery member having the functional layer of the present disclosure. In order to prevent pressure increase inside the battery and occurrence of overcharging or overdischarging, an overcurrent preventing device such as a fuse or a PTC device; an expanded metal; or a lead plate may be provided as necessary. The battery may have any shape, such as coin, button, sheet, cylindrical, square, or flattened shape.

### EXAMPLES

Hereinafter, the present disclosure will be specifically described with reference to Examples; however, the disclosure is not limited to Examples. In the following, "%" and "parts" used to express quantities are by mass, unless otherwise specified.

In Examples and Comparative Examples, the adhesiveness of a functional layer, the pressability of an electrode mixed material layer, and the rate characteristics of a secondary battery were evaluated by the methods described below.

### <Adhesiveness of Functional layer>

### <<Adhesiveness of Negative Electrode Mixed Material Layer as Functional Layer>>

A prepared negative electrode for a lithium ion secondary battery was cut into a rectangular shape measuring 100 mm in length and 10 mm in width to prepare a test piece. With an adhesive cellophane tape as specified in JIS Z1522, the negative electrode mixed material layer surface of the test piece was attached to a test stage (stainless steel substrate) with the negative electrode mixed material layer surface facing down. The stress (N/m) at the time when one end of the current collector was pulled and peeled in the vertical direction at a pulling rate of 50 mm/min was then measured (note that the adhesive cellophane tape was fixed to the test stage). The measurement was made 3 times and an average of measured values was recorded as peel strength, which was evaluated based on the criteria given below. A higher value of peel strength indicates higher adhesion between the negative electrode mixed material layer and the current collector and thus better adhesiveness of the negative electrode mixed material layer.
A: Peel strength is 3.0 N/m or more
B: Peel strength is 2.5 N/m or more and less than 3.0 N/m
C: peel strength is 1.5 N/m or more and less than 2.5 N/m
D: Peel strength is less than 1.5 N/m

### <<Adhesiveness of Positive Electrode Mixed Material Layer as Functional Layer>>

A prepared positive electrode for a lithium ion secondary battery was cut into a rectangular shape measuring 100 mm in length and 10 mm in width to prepare a test piece. With an adhesive cellophane tape as specified in JIS Z1522, the positive electrode mixed material layer surface of the test piece was attached to a test stage (stainless steel substrate) with the positive electrode mixed material layer surface facing down. The stress (N/m) at the time when one end of the current collector was pulled and peeled in the vertical direction at a pulling rate of 50 mm/min was then measured (note that the adhesive cellophane tape was fixed to the test stage). The measurement was made 3 times and an average of measured values was recorded as peel strength, which was evaluated based on the criteria given below. A higher value of peel strength indicates higher adhesion between the positive electrode mixed material layer and the current collector and thus better adhesiveness of the positive electrode mixed material layer.
A: Peel strength is 50.0 N/m or more
B: Peel strength is 40.0 N/m or more and less than 50.0 N/m
C: peel strength is 30.0 N/m or more and less than 40.0 N/m
D: Peel strength is less than 30.0 N/m

### <<Adhesiveness of Porous Membrane Layer as Functional Layer>>

A prepared separator having a porous membrane layer was cut into a rectangular shape measuring 100 mm in length and 10 mm in width to prepare a test piece. With an adhesive cellophane tape as specified in JIS Z1522, the porous membrane layer surface of the test piece was attached to a test stage (stainless steel substrate) with the porous membrane layer surface facing down. The stress (N/m) at the time when one end of the separator substrate was pulled and peeled in the vertical direction at a pulling rate of 50 mm/min was then measured (note that the adhesive cellophane tape was fixed to the test stage). The measurement was made 3 times and an average of measured values was recorded as peel strength, which was evaluated based on the criteria given below. A higher value of peel strength indicates higher adhesion between the porous membrane layer and the separator substrate and thus better adhesiveness of the porous membrane layer.
A: Peel strength is 3.0 N/m or more
B: Peel strength is 2.5 N/m or more and less than 3.0 N/m
C: peel strength is 1.5 N/m or more and less than 2.5 N/m
D: Peel strength is less than 1.5 N/m

### <Pressability of Electrode Mixed Material Layer>

### «Pressability of Negative Electrode Mixed Material Layer»

A prepared web of negative electrode was roll pressed on the negative electrode mixed material layer side under the conditions of a linear pressure of 11 t (ton) in an environment of 25±3°C to provide a negative electrode having a negative electrode mixed material layer density of 1.70 g/cm³. The negative electrode was then left to stand for 1 week in an environment of 25±3°C and 50±5% relative humidity. The negative electrode mix material layer density (g/cm³) of the negative electrode after 1 week was measured and evaluated based on the criteria given below. A higher negative electrode mixed material density after 1 week indicates a smaller amount of spring back of the negative electrode mixed material layer and thus better pressability of the negative electrode mixed material layer.
A: Negative electrode mixed material layer density after 1 week is 1.65 g/cm³ or more
B: Negative electrode mixed material layer density after 1 week is 1.60 g/cm³ or more and less than 1.65 g/cm³
C: Negative electrode mixed material layer density after 1 week is 1.50 g/cm³ or more and less than 1.60 g/cm³
D: Negative electrode mixed material layer density after 1 week is less than 1.50 g/cm³

### «Pressability of Positive Electrode Mixed Material Layer»

A prepared web of positive electrode was roll pressed on the positive electrode mixed material layer side under the conditions of a linear pressure of 14 t (ton) in an environment of 25±3°C to provide a positive electrode having a positive electrode mixed material layer density of 3.50 g/cm³. The positive electrode was then left to stand for 1 week in an environment of 25±3°C and 50±5% relative humidity. The positive electrode mix material layer density (g/cm³) of the positive electrode after 1 week was measured and evaluated based on the criteria given below. A higher positive electrode mixed material density after 1 week indicates a smaller amount of spring back of the positive electrode mixed material layer and thus better pressability of the positive electrode mixed material layer.
A: Positive electrode mixed material layer density after 1 week is 3.45 g/cm³ or more
B: Positive electrode mixed material layer density after 1 week is 3.40 g/cm³ or more and less than 3.45 g/cm³
C: Positive electrode mixed material layer density after 1 week is 3.35 g/cm³ or more and less than 3.40 g/cm³
D: Positive electrode mixed material layer density after 1 week is less than 3.35 g/cm³

### <Rate Characteristics of Secondary Battery>

After injection of an electrolyte solution, a prepared lithium ion secondary battery was allowed to stand at 25°C for 5 hours. Next, the battery was charged to a cell voltage of 3.65 V at a constant current of 0.2 C at 25 °C, and aged at 60°C for 12 hours. The battery was then discharged to a cell voltage of 3.00V at a constant current of 0.2C at 25°C. CC-CV charging (upper limit cell voltage of 4.35 V) was performed at a constant current of 0.2 C, and CC discharging was performed to a cell voltage of 3.00 V at a constant current of 0.2C. The charge/discharge cycle at 0.2 C was repeated three times.

Next, under the environment of 25°C, constant current charging/discharging at 0.2 C was carried out between a cell voltage of 4.20V and 3.00V. The discharge capacity at this time was defined as C0. Similarly, CC-CV charging was performed at a constant current of 0.2C, and discharging was performed to 2.5V at a constant current of 0.5 C in an environment of -10°C. The discharge capacity at this time was defined as C1. As rate characteristics, %capacity change represented by ΔC (=(C1/C0) × 100) was calculated and evaluated based on the criteria given below. A larger %capacity change ΔC value indicates a higher discharge capacity at high current in an low-temperature environment and lower internal resistance.
A: %capacity change ΔC is 65% or more
B: %capacity change ΔC is 60% or more and less than 65%
C: %capacity change ΔC is 55% or more and less than 60%
D: %capacity change ΔC is less than 55%

### (Example 1)

### <Preparation of Binder (Polymer A)>

A 5MPa pressure resistant vessel equipped with a stirrer was charged with 65 parts of styrene as an aromatic vinyl monomer, 35 parts of 1,3-butadiene as an aliphatic conjugated diene monomer, 2 parts of itaconic acid as a carboxylic acid group-containing monomer, 1 part of 2-hydroxyethyl acrylate as a hydroxyl group-containing monomer, 0.3 parts of t-dodecyl mercaptan as a molecular weight regulator, 5 parts of sodium dodecyl benzene sulfonate as an emulsifier, 150 parts of ion-exchanged water as a solvent, and 1 part of potassium persulfate as a polymerization initiator. After fully stirred, the temperature was raised to 55°C to initiate polymerization. When the monomer consumption reached to 95.0%, the reaction was quenched by cooling. To the resulting aqueous dispersion containing a polymer was added 5% sodium hydroxide aqueous solution for adjusting the pH to 8. Unreacted monomers were removed by heating under reduced pressure. Further, the resulting dispersion was cooled to 30°C or below to afford an aqueous dispersion containing polymer A as a binder.

### <Preparation of Binder Composition for Negative Electrode Mixed Material Layer>

A binder composition was prepared by mixing 1.0 part of melamine cyanurate as a melamine compound with 100 parts (in solid content) of the aqueous dispersion of polymer A.

### <Preparation of Slurry Composition for Negative Electrode Mixed Material Layer>

A planetary mixer was charged with 48.75 parts of artificial graphite (theoretical capacity: 360 mAh/g) and 48.75 parts of natural graphite (theoretical capacity: 360 mAh / g) as a negative electrode active material, and 1 part (in solid content) of carboxymethylcellulose as a thickener. The mixture was diluted with ion-exchanged water to a solid concentration of 60% and kneaded for 60 minutes at a rotational speed of 45 rpm. 1.5 parts (in solid content) of the binder composition for a negative electrode mixed material layer obtained above was added in the mixer and kneaded for 40 minutes at a rotational speed of 40 rpm. Ion-exchanged water was then added such that the mixture had a viscosity of 3,000±500 mPa·s (as measured by B-type viscometer at 25°C and 60 rpm) to prepare a slurry composition for a negative electrode mixed material layer.

### <Manufacture of Negative Electrode>

The slurry composition for a negative electrode mixed material layer thus obtained was applied by a comma coater on a surface of a 15 µm-thick copper foil (current collector) in a coating amount of 11±0.5 mg/cm². The copper foil coated with the slurry composition was then transferred through an oven at 80°C over 2 minutes and further through an oven at 110°C over 2 minutes at a rate of 400 mm/min, so that the slurry composition on the copper foil was dried. In this way a web of negative electrode was obtained in which a negative electrode mixed material layer was formed on the current collector. Using this web of negative electrode, the pressability of the negative electrode mixed material layer was evaluated. The results are shown in Table 1.

The prepared web of negative electrode was then roll pressed on the negative electrode mixed material layer side under the conditions of a linear pressure of 11 t (ton) in an environment of 25±3°C to provide a negative electrode having a negative electrode mixed material layer density of 1.60 g/cm³. The negative electrode was then left to stand for 1 week in an environment of 25±3°C and 50±5% relative humidity. Using the negative electrode left to stand for 1 week, the adhesiveness of the negative electrode mixed material layer was evaluated. The results are shown in Table 1.

### <Manufacture of Positive Electrode>

96 parts of an active material based on lithium composite oxide of Co-Ni-Mn (NMC 111, LiNi_{1/3}Co_{1/3}Mn_{1/3}O₂) as a positive electrode active material, 2 parts of acetylene black ("HS-100" manufactured by Denka Company Ltd.) as a conductor, and 2 parts of polvinylidene fluoride ("KF-1100" manufactured by KUREHA Corporation) as a binder were added into a planetary mixer, and N-methyl-2-pyrrolidone (NMP) as a dispersing medium was added to a total solid concentration of 67% and mixed to prepare a slurry composition for a positive electrode mixed material layer.

The slurry composition for a positive electrode mixed material layer thus obtained was applied by a comma coater on a surface of a 20 µm-thick aluminum foil (current collector) in a coating amount of 20±0.5 mg/cm².

The aluminum foil coated with the slurry composition was then transferred through an oven at 90°C over 2 minutes and further through an oven at 120°C over 2 minutes at a rate of 200 mm/min, so that the slurry composition on the aluminum foil was dried. In this way a web of positive electrode was obtained in which a positive electrode mixed material layer was formed on the current collector.

The prepared web of positive electrode was then roll pressed on the positive electrode mixed material layer side under the conditions of a linear pressure of 14 t (ton) in an environment of 25±3°C to provide a positive electrode having a positive electrode mixed material layer density of 3.40 g/cm³. The positive electrode was then left to stand for 1 week in an environment of 25±3°C and 50±5% relative humidity.

### <Preparation of Separator>

As a separator, Celgard 2500 made of polypropylene was used.

### <Manufacture of Secondary Battery>

Using the negative electrode, positive electrode and separator described above, a spirally wound cell (discharge capacity: 520 mAh) was manufactured and placed into an aluminum package. The aluminum package was then filled with a 1.0M LiPF₆ solution as an electrolyte solution (3:7 (by volume) mixed solvent of ethylene carbonate (EC) and diethyl carbonate (DEC), with 2% by volume (with respect to solvent) of vinylene carbonate as an additive). In order to tightly seal up the opening of the aluminum package, the aluminum package was closed by heat sealing at 150°C. In this way, a lithium ion secondary battery was manufactured and the rate characteristics were evaluated using the lithium ion secondary battery. The results are shown in Table 1.

### (Example 2)

Polymer A as a binder, a binder composition for a negative electrode mixed material layer, a slurry composition for a negative electrode mixed material layer, a negative electrode, a positive electrode, a separator, and a secondary battery were prepared as in Example 1 except that the amount of melamine cyanurate blended when preparing the binder composition was changed to 25 parts. Evaluations were made as in Example 1. The results are shown in Table 1.

### (Example 3) [not according to the present invention]

Polymer A as a binder, a binder composition for a negative electrode mixed material layer, a slurry composition for a negative electrode mixed material layer, a negative electrode, a positive electrode, a separator, and a secondary battery were prepared as in Example 2 except that ammeline was used instead of melamine cyanurate when preparing the binder composition. Evaluations were made as in Example 1. The results are shown in Table 1.

### (Example 4) [not according to the present invention]

Polymer A as a binder, a binder composition for a negative electrode mixed material layer, a slurry composition for a negative electrode mixed material layer, a negative electrode, a positive electrode, a separator, and a secondary battery were prepared as in Example 1 except that 82 parts of melamine was used instead of 1.0 part of melamine cyanurate when preparing the binder composition. Evaluations were made as in Example 1. The results are shown in Table 1.

### (Example 5)

Polymer A as a binder, a binder composition for a negative electrode mixed material layer, a slurry composition for a negative electrode mixed material layer, a negative electrode, a positive electrode, a separator, and a secondary battery were prepared as in Example 4 except that melamine cyanurate was used instead of melamine when preparing the binder composition. Evaluations were made as in Example 1. The results are shown in Table 1.

### (Example 6)

### Preparation of Binder (Polymer B)

A 1L flask equipped with a septum was charged with 720 g of ion-exchanged water, the temperature was raised to 40°C, and the flask was purged with nitrogen gas at a flow rate of 100 mL/min. Next, 10 g of ion-exchanged water, 25 parts of acrylic acid as a carboxylic acid group-containing monomer, and 75 parts of acrylamide were mixed and injected into the flask using a syringe. 8 parts of 2.5% potassium persulfate aqueous solution as a polymerization initiator was added into the flask using the syringe. After 15 minutes, 22 parts of 2.0% tetramethylethylenediamine aqueous solution as a polymerization accelerator was further added using the syringe. After 4 hours, 4 parts of 2.5% potassium persulfate aqueous solution as a polymerization initiator was added into the flask, 11 parts of 2.0% tetramethylethylenediamine aqueous solution as a polymerization accelerator was further added, and the temperature was raised to 60°C to allow the polymerization reaction to proceed. After 3 hours, the flask was opened to the air to quench the polymerization reaction, the product was deodorized at a temperature of 80°C, and the residual monomer was removed. The product was adjusted to pH 8 with 10% lithium hydroxide aqueous solution to afford an aqueous dispersion containing polymer B as a binder.

### <Preparation of Binder Composition for Negative Electrode Mixed Material Layer>

A binder composition was prepared by mixing 25 parts of melamine cyanurate as a melamine compound with 100 parts (in solid content) of the aqueous dispersion of polymer B.

### <Preparation of Slurry Composition for Negative Electrode Mixed Material Layer>

A planetary mixer was charged with 48.75 parts of artificial graphite (theoretical capacity: 360 mAh/g) and 48.75 parts of natural graphite (theoretical capacity: 360 mAh / g) as a negative electrode active material. The mixture was diluted with ion-exchanged water to a solid content concentration of 60% and kneaded for 60 minutes at a rotational speed of 45 rpm. 1.5 parts (in solid content) of the binder composition for a negative electrode mixed material layer obtained above was added in the mixer and kneaded for 40 minutes at a rotational speed of 40 rpm. Ion-exchanged water was then added such that the mixture had a viscosity of 3,000±500 mPa·s (as measured by B-type viscometer at 25°C and 60 rpm) to prepare a slurry composition for a negative electrode mixed material layer.

### <Manufacture of Negative Electrode>

A web of negative electrode and a negative electrode were obtained as in Example 1 except that the slurry composition for a negative electrode mixed material layer obtained above was used. The pressability of the negative electrode mixed material layer was evaluated using the obtained web of negative electrode, and the adhesiveness of the negative electrode mixed material layer was evaluated using the obtained negative electrode. The results are shown in Table 1.

### <Manufacture of Positive Electrode, Separator, and Secondary Battery>

A positive electrode, a separator, and a secondary battery were manufactured as in Example 1 except that the negative electrode obtained above was used. The rate characteristics were evaluated using the obtained lithium ion secondary battery. The results are shown in Table 1.

### (Example 7) [not according to the present invention]

### <Preparation of Binder (Polymer C)>

A polyvinylidene fluoride ("KF-1100" manufactured by KUREHA Corporation; polymer C) as a binder was dissolved in NMP to prepare a NMP solution of polymer C as a binder (solid content concentration: 8%)

### <Preparation of Binder Composition for Negative Electrode Mixed Material Layer>

A binder composition was prepared by mixing 25 parts of melamine cyanurate as a melamine compound with 100 parts (in solid content) of the NMP solution of polymer C.

### <Preparation of Slurry Composition for Negative Electrode Mixed Material Layer>

2.5 parts (in solid content) of the binder composition for a negative electrode mixed material layer obtained above was added to 48.75 parts of artificial graphite (theoretical capacity: 360 mAh/g) and 48.75 parts of natural graphite (theoretical capacity: 360 mAh / g) as a negative electrode active material, and the mixture was diluted with NMP to a solid content concentration of 50% and stirred with a disper blade for 1 hour at 3,000 rpm. NMP was then added such that the mixture had a viscosity of 3,000±500 mPa·s (as measured by B-type viscometer at 25°C and 60 rpm) to prepare a slurry composition for a negative electrode mixed material layer.

### <Manufacture of Negative Electrode>

The slurry composition for a negative electrode mixed material layer thus obtained was applied by a comma coater on a surface of a 15 µm-thick copper foil (current collector) in a coating amount of 11±0.5 mg/cm². The copper foil coated with the slurry composition was then transferred through an oven at 90°C over 2 minutes and further through an oven at 120°C over 2 minutes at a rate of 200 mm/min, so that the slurry composition on the copper foil was dried. In this way a web of negative electrode was obtained in which a negative electrode mixed material layer was formed on the current collector. Using this web of negative electrode, the pressability of the negative electrode mixed material layer was evaluated. The results are shown in Table 1.

The prepared web of negative electrode was then roll pressed on the negative electrode mixed material layer side under the conditions of a linear pressure of 11 t (ton) in an environment of 25±3°C to provide a negative electrode having a negative electrode mixed material layer density of 1.70 g/cm³. The negative electrode was then left to stand for 1 week in an environment of 25±3°C and 50±5% relative humidity. Using the negative electrode left to stand for 1 week, the adhesiveness of the negative electrode mixed material layer was evaluated.

### <Manufacture of Positive Electrode, Separator, and Secondary Battery>

A positive electrode, a separator, and a secondary battery were manufactured as in Example 1 except that the negative electrode obtained above was used. The rate characteristics were evaluated using the obtained lithium ion secondary battery. The results are shown in Table 1.

### (Example 8) [not according to the present invention]

### <Preparation of Binder (Polymer C)>

ANMP solution of polymer C as a binder (solid content concentration: 8%) was prepared as in Example 7.

### <Preparation of Binder Composition for Positive Electrode Mixed Material Layer>

A binder composition was prepared by mixing 25 parts of melamine cyanurate as a melamine compound with 100 parts (in solid content) of the NMP solution of polymer C.

### <Preparation of Slurry Composition for Positive Electrode Mixed Material Layer>

To 96 parts of an active material based on lithium composite oxide of Co-Ni-Mn (CELLSEED^{®} NMC 111 ("CELLSEED" is a registered trademark in Japan, other countries, or both), LiNi_{1/3}Co_{1/3}Mn_{1/3}O₂, manufactured by Nippon Chemical Industrial Co., Ltd.) as a positive electrode active material were added 2 parts of acetylene black ("HS-100" manufactured by Denka Company Ltd.) as a conductor and 2 parts (in solid content) of the binder composition for a positive electrode mixed material layer obtained above. The mixture was diluted with NMP to a solid content concentration of 65% and stirred with a disper blade for 1 hour at 3,000 rpm. Ion-exchanged water was then added such that the mixture had a viscosity of 3,000±500 mPa·s (as measured by B-type viscometer at 25°C and 60 rpm) to prepare a slurry composition for a positive electrode mixed material layer.

### <Manufacture of Positive Electrode>

A web of positive electrode and a positive electrode were manufactured as in Example 1 except that the slurry composition for a positive electrode mixed material layer obtained above was used. The pressability of the positive electrode mixed material layer was evaluated using the obtained web of positive electrode, and the adhesiveness of the positive electrode mixed material layer was evaluated using the obtained positive electrode. The results are shown in Table 1.

### <Manufacture of Negative Electrode>

A planetary mixer was charged with 48.75 parts of artificial graphite (theoretical capacity: 360 mAh/g) and 48.75 parts of natural graphite (theoretical capacity: 360 mAh / g) as a negative electrode active material, and 1 part (in solid content) of carboxymethylcellulose as a thickener. The mixture was diluted with ion-exchanged water to a solid concentration of 60% and kneaded for 60 minutes at a rotational speed of 45 rpm. 1.5 parts (in solid content) of polymer A obtained as in Example 1 was added in the mixer and kneaded for 40 minutes at a rotational speed of 40 rpm. Ion-exchanged water was then added such that the mixture had a viscosity of 3,000±500 mPa·s (as measured by B-type viscometer at 25°C and 60 rpm) to prepare a slurry composition for a negative electrode mixed material layer.

The slurry composition for a negative electrode mixed material layer thus obtained was applied by a comma coater on a surface of a 15 µm-thick copper foil (current collector) in a coating amount of 11±0.5 mg/cm². The copper foil coated with the slurry composition was then transferred through an oven at 80°C over 2 minutes and further through an oven at 110°C over 2 minutes at a rate of 400 mm/min, so that the slurry composition on the copper foil was dried. In this way a web of negative electrode was obtained in which a negative electrode mixed material layer was formed on the current collector.

The prepared web of negative electrode was then roll pressed on the negative electrode mixed material layer side under the conditions of a linear pressure of 11 t (ton) in an environment of 25±3°C to provide a negative electrode having a negative electrode mixed material layer density of 1.60 g/cm³. The negative electrode was then left to stand for 1 week in an environment of 25±3°C and 50±5% relative humidity.

### <Manufacture of Separator and Secondary Battery>

A separator was prepared and a secondary battery was manufactured as in Example 1 except that the positive and negative electrodes obtained above were used. The rate characteristics were evaluated using the obtained lithium ion secondary battery. The results are shown in Table 1.

### (Example 9)

### <Preparation of Binder (Polymer D)>

To a reactor A equipped with a mechanical stirrer and a condenser were added 85 parts of ion-exchanged water and 0.2 parts of sodium linear alkylbenzene sulfonate in a nitrogen atmosphere, and the mixture was heated to 55°C with stirring. 0.3 parts of potassium persulfate (5.0% aqueous solution) was added to the reactor A. To another vessel B equpped with a mechanical stirrer were added 93.3 parts (96.0 mol%) of acrylonitrile as a nitrile group-containing monomer, 1.9 parts (1.2 mol%) of methacrylic acid as a carboxylic acid group-containing monomer, 2.3 parts (0.8 mol%) of dimethylaminoethyl methacrylate as an amino group-containing monomer, 4.7 parts (2.0 mol%) of n-butyl acrylate as a (meth)acrylic acid ester monomer, 0.6 parts of sodium linear alkyl benzene sulfonate, 0.035 parts of tertiary dodecyl mercaptan, 0.4 parts of polyoxyethylene lauryl ether, and 80 parts of ion-exchanged water in a nitrogen atomoshere, and emulfisied by stirring to prepare a monomer mixture solution. The monomer mixture solution was added to the reactor A at a constant rate over 5 hours while being emulsified by stirring, and was reacted until the polymerization conversion ratio reached 95%. In this way an aqueous dispersion of copolymer was obtained. NMP was added to the aqueous dispersion of copolymer to a solid content concentration of 7%. The resulting solution was distilled under reduced pressure at 90°C to remove water and excess NMP to afford an NMP solution of polymer D as a binder (solid content concentration: 8%).

### <Preparation of Binder Composition for Positive Electrode Mixed Material Layer>

A binder composition was prepared by mixing 25 parts of melamine cyanurate as a melamine compound with 100 parts (in solid content) of the NMP solution of polymer D.

### <Preparation of Slurry Composition for Positive Electrode Mixed Material Layer, Positive Electrode, Negative Electrode, Separator, and Secondary Battery>

A slurry composition for a positive electrode mixed material layer, a positive electrode, a negative electrode, a separator, and a secondary battery were prepared as in Example 8 except that the binder composition for a positive electrode mixed material layer obtained above was used. Evaluations were then made as in Example 8. The results are shown in Table 1.

### (Example 10)

Polymer D as a binder, a binder composition for a positive electrode mixed material layer, a slurry composition for a positive electrode mixed material layer, a positive electrode, a negative electrode, a separator, and a secondary battery were prepared as in Example 9 except that the amount of melamine cyanurate blended was changed to 19 parts and 6.3 parts of sodium hydrogen carbonate as a foaming agent was blended when preparing the binder composition. Evaluations were made as in Example 8. The results are shown in Table 1.

### (Example 11)

Polymer D as a binder, a binder composition for a positive electrode mixed material layer, a slurry composition for a positive electrode mixed material layer, a positive electrode, a negative electrode, a separator, and a secondary battery were prepared as in Example 10 except that 6.3 parts of a phosphorus compound as a flame retardant was blended instead of 6.3 parts of sodium hydrogen carbonate as a foaming agent when preparing the binder composition. Evaluations were made as in Example 8. The results are shown in Table 1.

### (Example 12)

Polymer D as a binder, a binder composition for a positive electrode mixed material layer, a slurry composition for a positive electrode mixed material layer, a positive electrode, a negative electrode, a separator, and a secondary battery were prepared as in Example 10 except that 6.3 parts of a silicone compound as a flame retardant was blended instead of 6.3 parts of sodium hydrogen carbonate as a foaming agent when preparing the binder solution. Evaluations were made as in Example 8. The results are shown in Table 1.

### (Example 13)

### <Preparation of Binder (Polymer E)>

A reactor equipped with a stirrer was charged with 70 parts of ion-exchanged water, 0.15 parts of sodium lauryl sulfate ("EMAL 2F" manufactured by Kao Chemicals) as an emulsifier and 0.5 parts of ammonium persulfate, the gas phase was purged with nitrogen gas, and the temperature was raised to 60°C.

In another vessel, 50 parts of ion-exchanged water, 0.5 parts of sodium dodecylbenzenesulfonate as an emulsifier, 94 parts of butyl acrylate as a (meth)acrylic acid ester monomer, 2 parts of acrylonitrile as a nitrile group-containing monomer, 2 parts of methacrylic acid as a carboxylic acid group-containing monomer, 1 part of N-hydroxymethyl acrylamide as a hydroxyl group-containing monomer, and 1 part of allyl glycidyl ether as an epoxy group-containing monomer were mixed to afford a monomer composition. The monomer composition was continuously added to the reactor over 4 hours for polymerization. During addition, the temperature was retained at 60°C for polymerization reaction. After completion of addition, the reaction mass was stirred for a further 3 hours at 70°C, and the reaction was terminated to afford an aqueous dispersion containing polymer E as a binder.

### <Preparation of Binder Composition for Porous Membrane Layer>

A binder composition was prepared by mixing 25 parts of melamine cyanurate as a melamine compound with 100 parts (in solid content) of the aqueous dispersion of polymer E.

### <Preparation of Slurry Composition for Porous Membrane Layer>

To 100 parts (in solid content) of alumina ("AKP3000" manufactured by Sumitomo Chemical Co., Ltd.) as non-conductive particles, 5 parts (in solid content) of the binder composition for a porous membrane layer obtained above, 1.5 parts of polyacrylamide as a thickener, and 0.8 parts of polyacrylic acid as a dispersant, ion-exchanged water was added to a solid content concentration of 40%, and mixed with a ball mill to afford a slurry composition for a porous membrane layer.

### <Manufacture of Separator>

The slurry composition for a porous membrane layer obtained above was applied on an organic separator substrate ("Celgard 2500", polypropylene separator substrate) such that the coating of the slurry composition had a thickness of 2 µm, and dried at 50°C for 10 minutes to afford a separator having a porous membrane layer formed on one side of the organic separator substrate. The adhesiveness of the porous membrane layer was evaluated using the separator having the porous membrane layer on one side. The results are shown in Table 1. Separately, a separator having a porous membrane layer formed on both sides of an organic separator substrate was obtained by performing the coating and drying described above on both sides of the organic separator substrate.

### <Manufacture of Negative Electrode>

A negative electrode was manufactured as in Example 8.

### <Manufacture of Positive Electrode>

A positive electrode was manufactured as in Example 1.

### <Manufacture of Secondary Battery>

Using the negative electrode, positive electrode and separator described above, a spirally wound cell (discharge capacity: 520 mAh) was manufactured and placed into an aluminum package. The spirally wound cell was pressed for 8 seconds together with the aluminum package at 70°C and a pressure of 1.0 MPa in a heating type flat press, allowing the separator and the electrodes (positive and negative electrodes) to be bonded together.

The aluminum package was then filled with a 1.0M LiPF₆ solution as an electrolyte solution (3:7 (by volume) mixed solvent of ethylene carbonate (EC) and diethyl carbonate (DEC), with 2% by volume (with respect to solvent) of vinylene carbonate as an additive). In order to tightly seal up the opening of the aluminum package, the aluminum package was closed by heat sealing at 150°C. In this way, a lithium ion secondary battery was manufactured, and the rate characteristics were evaluated using the lithium ion secondary battery. The results are shown in Table 1.

### (Comparative Example 1)

Polymer A as a binder, a binder composition for a negative electrode mixed material layer, a slurry composition for a negative electrode mixed material layer, a negative electrode, a positive electrode, a separator, and a secondary battery were prepared as in Example 1 except that melamine cyanurate was not blended when preparing the binder composition. Evaluations were made as in Example 1. The results are shown in Table 1.

### (Comparative Example 2)

Polymer B as a binder, a binder composition for a negative electrode mixed material layer, a slurry composition for a negative electrode mixed material layer, a negative electrode, a positive electrode, a separator, and a secondary battery were prepared as in Example 6 except that the amount of melamine cyanurate blended was changed to 400 parts when preparing the binder composition. Evaluations were made as in Example 1. The results are shown in Table 1.

### (Comparative Example 3)

Polymer C as a binder, a binder composition for a positive electrode mixed material layer, a slurry composition for a positive electrode mixed material layer, a positive electrode, a negative electrode, a separator, and a secondary battery were prepared as in Example 8 except that melamine cyanurate was not blended when preparing the binder composition. Evaluations were made as in Example 8. The results are shown in Table 1.

### (Comparative Example 4)

Polymer D as a binder, a binder composition for a positive electrode mixed material layer, a slurry composition for a positive electrode mixed material layer, a positive electrode, a negative electrode, a separator, and a secondary battery were prepared as in Example 9 except that melamine cyanurate was not blended when preparing the binder composition. Evaluations were made as in Example 8. The results are shown in Table 1.

### (Comparative Example 5)

Polymer E as a binder, a binder composition for a porous membrane layer, a slurry composition for a porous membrane layer, a positive electrode, a separator, a positive electrode, a negative electrode and a secondary battery were prepared as in Example 13 except that melamine cyanurate was not blended when preparing the binder composition. Evaluations were made as in Example 13. The results are shown in Table 1.

In Table 1 below, "SBR" represents an aliphatic conjugated diene/aromatic vinyl copolymer (styrene-butadiene copolymer), "AA/AAm" represents an acrylic acid / acrylamide copolymer, "PVDF" represents a fluorine polymer (polyvinylidene fluoride), "PAN" represents an acrylonitrile polymer, and "ACR" represents an acrylic polymer.

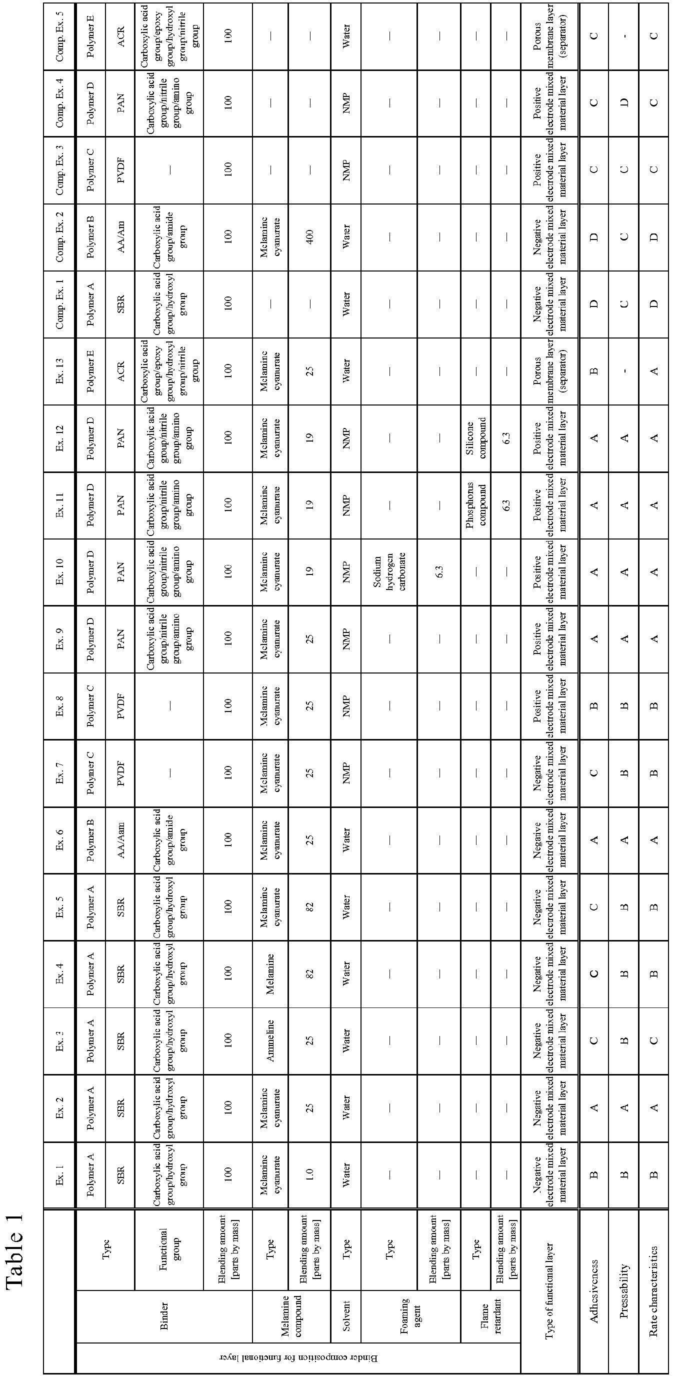

NB : Examples 3, 4, 7 & 8 are not according to the present invention; they are given for reference only.

It can be seen from Table 1 that Examples 1 to 13 wherein a binder composition containing a binder and an amount of a melamine compound which falls within a specific range with respect to the amount of the binder was used were able to improve the rate characteristics of a secondary battery while allowing a functional layer to exert excellent adhesiveness. It can also be seen from Table 1 that Examples 1 to 12 wherein a binder composition containing a binder and an amount of a melamine compound which falls within a specific range with respect to the amount of the binder was used to prepare an electrode mixed material layer were able to provide the electrode mixed material layer with excellent pressability.

On the other hand, it can be seen from Table 1 that Comparative Examples 1 and 3 to 5 wherein a binder composition containing a binder but no melamine compound was used failed to ensure that a functional layer has sufficient adhesiveness and a secondary battery has sufficient rate characteristics. It can also be seen from Table 1 that Comparative Examples 1, 3 and 4 wherein a binder composition containing a binder but no melamine compound was used to prepare an electrode mixed material layer resulted in the electrode mixed material layer having impaired pressability. It can also be seen from Table 1 that Comparative Example 2 wherein a binder composition containing a binder and an amount of a melamine compound which falls beyond a specific range with respect to the amount of the binder was used to prepare an electrode mixed material layer (functional layer) failed to ensure that a functional layer has sufficient adhesiveness and a secondary battery has sufficient rate characteristics, as well as resulted in the electrode mixed material layer having impaired pressability.

### INDUSTRIAL APPLICABILITY

According to the present disclosure, it is possible to provide a binder composition for non-aqueous secondary batteries which has an excellent binding capacity and which is capable of forming a functional layer which may improve the rate characteristics of non-aqueous secondary batteries.

According to the present disclosure, it is also possible to provide a slurry composition for non-aqueous secondary battery functional layers which is capable of forming a functional layer which has excellent adhesiveness and which may improve the rate characteristics of non-aqueous secondary batteries.

According to the present disclosure, it is also possible to provide a functional layer for non-aqueous secondary batteries which has excellent adhesiveness and which may improve the rate characteristics of non-aqueous secondary batteries.

According to the present disclosure, it is also possible to provide a non-aqueous secondary battery having excellent rate characteristics.

## Claims

1. A binder composition for a non-aqueous secondary battery, comprising:
a binder; and
a melamine compound,
wherein an amount of the melamine compound is 0.5 parts by mass or more and 85 parts by mass or less per 100 parts by mass of the binder,
wherein the binder is a polymer having at least one functional group selected from the group consisting of carboxylic acid group, hydroxyl group, amino group, epoxy group, oxazoline group, sulfo group, nitrile group, and amide group, and
wherein the melamine compound is melamine cyanurate.

2. The binder composition for a non-aqueous secondary battery according to claim 1, wherein the amount of the melamine compound is 0.5 parts by mass or more and 30 parts by mass or less per 100 parts by mass of the binder.

3. A slurry composition for a non-aqueous secondary battery functional layer comprising the binder composition for a non-aqueous secondary battery according to claim 1 or 2.

4. The slurry composition for a non-aqueous secondary battery functional layer according to claim 3, further comprising electrode active material particles.

5. A functional layer for a non-aqueous secondary battery formed using the slurry composition for a non-aqueous secondary battery functional layer according to claim 3 or 4.

6. A non-aqueous secondary battery comprising the functional layer for a non-aqueous secondary battery according to claim 5.

## Patentansprüche

1. Eine Bindemittelzusammensetzung für eine nichtwässrige Sekundärbatterie, umfassend:
ein Bindemittel; und
eine Melaminverbindung,
wobei der Anteil der Melaminverbindung 0,5 Gewichtsteile oder mehr und 85 Gewichtsteile oder weniger pro 100 Gewichtsteilen des Bindemittels beträgt,
wobei das Bindemittel ein Polymer mit mindestens einer funktionellen Gruppe ausgewählt aus der Gruppe bestehend aus Carbonsäuregruppe, Hydroxylgruppe, Aminogrupe, Epoxygruppe, Oxazolingruppe, Sulfogruppe, Nitrilgruppe, und Amidgruppe, und
wobei die Melaminverbindung Melamincyanurat ist.

2. Die Bindemittelzusammensetzung für eine nichtwässrige Sekundärbatterie gemäß Anspruch 1, wobei der Anteil der Melaminverbindung 0,5 Gewichtsteile oder mehr und 30 Gewichtsteile oder weniger pro 100 Gewichtsteilen des Bindemittels beträgt.

3. Eine Schlämme-Zusammensetzung für eine Funktionsschicht einer nichtwässrigen Sekundärbatterie, umfassend die Bindemittelzusammensetzung für eine nichtwässrige Sekundärbatterie gemäß Anspruch 1 oder 2.

4. Die Schlämme-Zusammensetzung für eine Funktionsschicht einer nichtwässrigen Sekundärbatterie gemäß Anspruch 3, außerdem umfassend Partikel aus elektrodenaktivem Material.

5. Eine Funktionsschicht für eine nichtwässrige Sekundärbatterie, hergestellt aus der Schlämme-Zusammensetzung für eine Funktionsschicht einer nichtwässrigen Sekundärbatterie gemäß Anspruch 3 oder 4.

6. Eine nichtwässrige Sekundärbatterie umfassend die Funktionsschicht für eine nichtwässrige Sekundärbatterie gemäß Anspruch 5.

## Revendications

1. Composition de liant pour une batterie secondaire non aqueuse, comprenant :
un liant ; et
un composé de mélamine,
dans laquelle une quantité du composé de mélamine est de 0,5 partie en masse ou plus et de 85 parties en masse ou moins pour 100 parties en masse du liant,
dans laquelle le liant est un polymère ayant au moins un groupe fonctionnel choisi dans le groupe constitué par un groupe acide carboxylique, un groupe hydroxyle, un groupe amino, un groupe époxy, un groupe oxazoline, un groupe sulfo, un groupe nitrile et un groupe amide, et
dans laquelle le composé mélamine est le cyanurate de mélamine.

2. Composition de liant pour une batterie secondaire non aqueuse selon la revendication 1, dans laquelle une quantité du composé de mélamine est de 0,5 partie en masse ou plus et de 30 parties en masse ou moins pour 100 parties en masse du liant

3. Composition de boue pour une couche fonctionnelle de batterie secondaire non aqueuse comprenant la composition de liant pour une batterie secondaire non aqueuse selon la revendication 1 ou 2.

4. Composition de boue pour une couche fonctionnelle de batterie secondaire non aqueuse selon la revendication 3, comprenant en outre des particules de matériau actif d'électrode.

5. Couche fonctionnelle pour une batterie secondaire non aqueuse formée en utilisant la composition de boue pour une couche fonctionnelle de batterie secondaire non aqueuse selon la revendication 3 ou 4.

6. Batterie secondaire non aqueuse comprenant la couche fonctionnelle pour une batterie secondaire non aqueuse selon la revendication 5.
